# NEUE EUROPÄISCHE PATENTSCHRIFT

(11) **EP 0 126 391 B2**
(45) Veröffentlichungstag und Bekanntmachung des Hinweises auf die Entscheidung über den Einspruch: **18.11.1993**
(45) Hinweis auf die Patenterteilung: 01.08.1990
(21) Anmeldenummer: 84105318.4
(22) Anmeldetag: 10.05.1984
(51) Int. Cl.: C21B 13/00, C21B 13/14

(54) **Verfahren zur Eisenherstellung**
Iron production method
Procédé de production de fer

(30) Priorität: 18.05.1983 DE 3318005
(43) Veröffentlichungstag der Anmeldung: 28.11.1984
(73) Patentinhaber: KLÖCKNER CRA PATENT GMBH, 47057 Duisburg (DE)
(72) Erfinder: von Bogdandy, Ludwig, Prof. Dr.-Ing., D-4200 Oberhausen-Sterkrade (DE); Brotzmann, Karl, Prof. Dr.-Ing., D-8458 Sulzbach-Rosenberg (DE)
(74) Vertreter: Kador & Partner

(56) Entgegenhaltungen:
- DE-A- 2 424 932
- DE-A- 2 520 938
- DE-A- 3 031 680
- DE-A- 3 034 539
- DE-A- 3 133 575
- DE-B- 1 272 324
- DE-B- 2 755 165
- Stahl und Eisen 94 (1974), Nr. 23, Seite 1109 - 1114

## Beschreibung

Die Erfindung bezieht sich auf ein Verfahren zur Eisenherstellung aus Eisenerz, das in einem Erzreduktionsgefäß im wesentlichen mit dem Reaktionsgas aus einem Einschmelzgefäß vor reduziert und dann dem Einschmelzgefäß zugeführt und unter Zugabe von kohlenstoffenthaltenden Brennstoffen und sauerstoffhaltigen Gasen, beispielsweise Sauerstoff oder Luft, vollständig reduziert und geschmolzen wird.

Zum Stand der Technik gehören bereits Verfahren, flussiges Roheisen direkt aus Erz zu erzeugen. Die deutsche Offenlegungsschrift 30 34 539 beschreibt ein Verfahren zur direkten Erzeugung von flüssigem Roheisen aus stückigem Eisenerz, das in einem Direktreduktionsschachtofen in Form einer losen Schüttung mittels eines heißen Reduktionsgases zu Eisenschwamm reduziert und dann durch eine Austragsvorrichtung im heißen Zustand einem Einschmelzvergaser zugeführt wird. In diesem Gefäß wird durch Kohle und sauerstoffhaltiges Gas die zum Schmelzen des Eisenschwamms erforderliche Wärme eingebracht und das Reduktionsgas erzeugt.

Nach einem ähnlichen Prinzip arbeiten weitere in jüngster Zeit bekannt gewordene Prozesse, die sich im wesentlichen durch Vorrichtungsmerkmale voneinander unterscheiden, z.B. das COINVerfahren, das KR-Verfahren und der Kawasaki Steel Process. Die wirtschaftlichen Nachteile dieser Verfahren liegen hauptsächlich darin, daß hochwertige Brennstoffe, wie beispielsweise aschearme Antrazitkohle oder besonderer Braunkohlenkoks, verwendet werden müssen, damit dem Einschmelzgefäß genügend Energie zugeführt wird, um das im Reduktionsprozeß anfallende Eisen einzuschmelzen. Aber selbst unter diesen Voraussetzungen ist ein hoher Kohlesatz erforderlich und das dabei entstehende Reaktionsgas übersteigt beträchtlich die für den Erzreduktionsprozeß erforderliche Gasmenge. Für die wirtschaftliche Anwendung der genannten Verfahren ist es deshalb wichtig, daß der Gasüberschuß sinnvoll verwertet werden kann. Diese Bedingung ist jedoch häufig nicht erfüllbar.

Auch das in der DE-A-3 133 575 beschriebene Verfahren leidet daran, daß große Mengen an heißem Abgas anfallen, so daß es dem Verfahren an Wirtschaftlichkeit und Umweltverträglichkeit mangelt.

Bei dem aus der DE-A-2 424 935 bekanntgewordenen Verfahren wird zwar eine Reduktion des Gases mit Kohlenstaub, Wasserdampf und/ oder Kohlendioxyd vorgenommen, jedoch werden die aus der Eisenschmelze austretenden Reaktionsgase im Einschmelzgefäß nicht nachverbrannt, so daß auch bei diesem Verfahren große Abgasmengen anfallen.

Die Aufgabenstellung der Erfindung ist das Verfahren so zu gestalten, daß möglichst die ganze Energie der dem Prozeß zugeführten Energieträger, in erster Linie Kohle, vollständig genutzt werden und keine Abströme anfallen, die wesentliche Energiemengen enthalten.

Wesentlichster Abstrom ist das das Erzreduktionsgefäß verlassende Gas. Es ist folglich Zielsetzung des erfindungsgemäßen Verfahrens, daß dieses Gas in möglichst geringer Menge anfällt und möglichst wenig Energieinhalt aufweist.

Diese Aufgabe ist bei dem erfindungsgemäßen Verfahren durch die Merkmale des Anspruches 1 gelöst. Bevorzugte Ausführungsformen der Erfindung sind in dem Ansprüchen 2-12 ausgeführt.

Gemäß der vorliegenden Erfindung wird in dem Einschmelzgefäß in bekannter Weise dem Eisenbad zusätzliche Energie aus der Nachverbrennung der Abgase übertragen, wie beispielsweise in der DE AS 27 55 165 beschrieben. Die Reaktionsgase werden dann, bevor sie in das Erzreduktionsgefäß eingeleitet werden, durch Zusatz von Reduktionsmitteln abgekühlt und dabei gleichzeitig reduziert, so daß sie für den Reduktionsprozeß eine günstigere Zusammensetzung aufweisen. Es kann z.B. im Schmelzgefäß nach dem erfindungsgemäßen Verfahren eine preisgünstige Gasflammkohle folgender Zusammensetzung verwendet werden: C 73,1%, H 4%, 0₂ 11,1%, N₂ 1,5%, Asche 8,5%, flüchtige Bestandteile 27%, Feuchtigkeit 1,5%, Heizwert Hu 28052 kJ (6700 kcal). Ohne Nachverbrennung der Reaktionsgase würde diese Kohle praktisch keine Energie bei der Vergasung an das Eisenbad abgeben.

Gemäß der Erfindung wird Sauerstoff oder vorgewärmte Luft in den Gasraum des Einschmelzgefäßes eingeblasen. Die auf die Schmelze geblasene Sauerstoffmenge kann dabei abhängig von dem gewünschten Nachverbrennungsgrad zwischen etwa 10% bis 90% beliebig variiert werden. Auf diese Weise erreicht man bei dem vorliegenden Beispiel durch Aufblasen von 30% Sauerstoff eine Nachverbrennung von 15% des CO-Anteiles. Die Reaktionsgaszusammensetzungen sind
a) ohne Nachverbrennung CO 68%, H₂ 27%, N₂ 5%,
b) mit Nachverbrennung CO 57%, C0₂ 10%, H₂ 16%, H₂0 12%, N₂ 5%.

Die aus der Nachverbrennung zusätzlich gewonnene Energie wird nahezu vollständig an das Eisenbad übertragen.

Durch den Zusatz von 8 Vol.-% Erdgas, bezogen auf die Reaktionsgasmenge, erniedrigt sich die Gastemperatur von 1575°C auf 900°C und gleichzeitig verringert sich der Oxidationsgrad von 23% auf 12%. Die Gaszusammensetzung nach dieser Reduktionsgaszugabe beträgt dann CO 54%, C0₂ 6%, H₂ 30%, H₂0 5%, Nz 4%.

Die Reduktion der Reaktionsgase kann auch durch das Einblasen von pulverförmiger Kohle erfolgen. Gemäß dem Beispiel werden pro 1000 m³ Reduktionsgas 74 kg Kohle eingeblasen. Dabei erniedrigt sich wiederum die Gastemperatur von 1575°C auf 900°C. Der Oxidationsgrad des Gases wird gleichzeitig um 15% gesenkt und das Gas besteht dann aus CO 66%, C0₂ 5%, H₂ 22%, H₂0 2%, N₂ 5%. Diese Gaszusammensetzung eignet sich optimal für die Erzreduktion im Reduktionsgefäß.

Anstelle von Sauerstoff kann auch vorgewärmte Luft, gegebenenfalls mit Sauerstoff angereichert, in das Einschmelzgefäß geblasen werden. Bei einer Heißwindtemperatur von ca. 1200°C ergibt sich im Einschmelzgefäß der gleiche thermische Wirkungsgrad wie bei der Verwendung von reinem Sauerstoff. Soll mit niedrigeren Heißwindtemperaturen gearbeitet werden, so kann eine gewisse Anreicherung der Luft durch Sauerstoff zweckmäßig sein.

Ein Vorteil dieser Verfahrensvariante ist es, daß die Wärmemenge gegenüber der Verwendung von Sauerstoff im Abgas größer ist, was den Zusatz von höheren Mengen an Erdgas oder Kohle erlaubt, wodurch die im Abgas verbleibenden CO_{Z}- und H₂0-Gehalte weiter herabgesetzt werden. Die Zusammensetzung für den anschließenden Erzreduktionsprozeß ist also bei dieser Verfahrensvariante günstiger.

Die Nachverbrennung im Einschmelzgefäß erfolgt über das Aufblasen von Heißwind mit einer Temperaturvon 1200°C. Dabei entsteht im Einschmelzgefäß ein Reaktionsgas mit einem Oxidationsgrad von 23%, bezogen auf den CO- und H₂-Anteil. Durch den Zusatz von 120 kg staubförmiger Kohle als Reduktionsmittel zum Reaktionsgas wird der Oxidationsgrad des Gases auf etwa 2% herabgesetzt. Das Gas kühlt dabei, wie bereits im Beispiel mit Sauerstoff als Aufblasmedium beschrieben, auf 900°C ab.

Der wirtschaftliche Vorteil dieser Variante der Erfindung besteht darin, daß im Einschmelzgefäß hohe Energiemengen übertragen werden, das Gas durch Reduktionsmittelzugabe auf eine optimale Zusammensetzung für die Erzreduktion gebracht wird und für das Erzreduktionsverfahren im Reduktionsgefäß keine kostspielige Rückführung der Gase, für die eine C0₂-Entfernung und Wiederaufheizung erforderlich wäre, durchgeführt zu werden braucht.

Erfindungsgemäß kann die Zugabe der Reduktionsmittel und die damit verbundene Abkühlung der Reaktionsgase in einem besonderen Gefäß durchgeführt werden. Dieses Konditionierungsgefäß, das im Gasfluß zwischen dem Einschmelzreaktor und dem Erzreduktionsgefäß angeordnet ist, wird vorteilhafterweise so ausgebildet, daß eine möglichst innige Durchmischung der Reaktionsgase mit dem Reduktionsmittel erfolgt. Das Konditionierungsgefäß kann zweckmäßigerweise eine möglichst große Wärmekapazität, z.B. ähnlich einem Winderhitzer, aufweisen, damit eine weitgehend konstante Temperatur der Gase für den Reduktionsprozeß erreicht wird.

Gemäß einem weiteren Merkmal der Erfindung kann es vorteilhaft sein, das Reaktionsgas nach erfolgter Reduktion und einer Grobstaubreinigung, z.B. in einem Heißzyklon mit einer Temperatur von ca. 900°C, direkt in das Erzreduktionsgefäß einzuleiten. Es können die bekannten Reduktionsverfahren angewendet werden, wie z.B. der Schachtofen, die Gasreduktion von Feinerz, in einer zirkulierenden Wirbelschicht oder in einem Wirbelbettverfahren. Es liegt auch im Sinne der Erfindung, das Abgas aus dem Erzreduktionsgefäß in bekannter Weise aufzubereiten und dem Reduktionsprozeß erneut zuzuführen.

Die vorliegende Erfindung ermöglicht außerdem die Anwendung einer metallurgischen Verfahrensweise, die einen besonderen Nachteil der zum Stand der Technik gehörenden Verfahren, nämlich hohe Schwefelgehalte im flüssigen Eisen, vermeidet. Bei den bisherigen Verfahren findet sich fast der gasamte Schwefel im geschmolzenen Eisen wieder. Der Schwefelgehalt beträgt dann etwa 0,5-1 %, und damit werden aufwendige Verfahren für die Entschwefelung erforderlich. Das variable und hohe Energieeinbringen, insbesondere auf der Reaktionsgasnachverbrennung im Schmelzgefäß, ermöglicht es, bei dem erfindungsgemäßen Verfahren die Badtemperatur bei etwa 1550°C zu halten und außerdem größere Mengen Kalkals Schlackenbildnerzuzugeben, um eine Schlakkenbasizität von etwa 2 einzustellen. Abweichend von den üblichen Bedingungen mit einer Kalkzugabe von ca. 80 kg pro Tonne Kohle, muß der Kalksatz auf etwa 200 kg erhöht werden. Überraschenderweise werden dann mit der erfindungsgemäßen metallurgischen Verfahrensweise Schwefelverteilungszahlen zwischen Schlacke und Bad von etwa 100 erreicht, und die Schwefelgehalte im flüssigen Eisen liegen dann bei etwa 0,015%.

Dis genannten Schlacken führen außerdem noch zu einer nennenswerten Entphosphorung und es kann mit dem erfindungsgemäßen Verfahren ein flüssiges Eisen mit der ungefähren Zusammensetzung von Stahl hergestellt werden. Diese Ausgangsschmelze kann dann mit den bekannte modernen Verfahren der Sekundärmetallurgie in der Abstichpfanne zur gewünschten Stahlanalyse nachbehandelt werden.

Ein besonderer Vorteil des erfindungsgemäßen Verfahrens besteht in der Koppelung von Einschmelzgefäß mit dem Erzreduktionsgefäß, beispielsweise einem Schachtofen. Die Reaktionsgasmengen aus dem Einschmelzgefäß sind dabei auf den Reduktionsgasbedarf im Erzreduktionsgefäß abgestimmt. Durch die erfindungsgemäße Zuführ von Reduktionsmitteln beispielsweise Erdgas oder Kohlestaub, zu den Reaktionsgasen aus dem Einschmelzgefäß, wird es möglich, fühlbare Wärme in chemische Wärme gezielt umzuwandeln und das Reduktionspotential der Reaktionsgase zu steigern und gleichzeitig die Temperatur auf optimale Werte für den Erzreduktionsprozeß herabzusetzen.

Bei diesem Verbundsystem, d.h. dem Direktanschluß von Einschmelzgefäß an das Erzreduktionsgefäß, gegebenenfalls mit zwischengeschaltetem Konditionierungsgefäß und Heitßzyklonentstauber, besteht eine weitere besonders vorteilhafte Anwendung des erfindungsgemäßen Verfahrens darin, das Einschmelzgefäß mit Überdruck im Bereich von ca. 150-500 kPa (1,5 bis 5 bar) zu betreiben. Der eingestellte Uberdruck ist zweckmäßigerweise so zu bemessen, daß er über den Gasamtdruckverlusten der Reaktionsgase auf ihrem Weg vom Einschmelzgefäß über die zwischengeschalteten Vorrichtungen bis zum Gasaustritt am Erzreduktionsgefäß liegt. Bei dieser Verfahrensweise erübrigen sich relativ aufwendige Einrichtungen zur Komprimierung der Gase für den Erzreduktionsprozeß.

Im Sinne der Erfindung liegt es weiterhin, die Reaktionsgase aus dem Einschmelzgefäß unmittelbar darüber durch die Zugabe der Reduktionsmittel, beispielsweise Erdgas oder Kohlestaub, zu reduzieren und abzukühlen, damit die vom Gasstrom mitgerissenen Metall- und Schlackenteilchen unter ihren Soliduspunkt abkühlen und damit nicht zu Ansätzen in der Reaktionsgasleitung führen. Falls dagegen derartige Spritzer und Grobstaubteilchen im nicht erstarrten Zustand an die Wand der Reaktionsgasleitung spritzen, können sie sort zu störenden Anbackungen führen. aus denen dann widerum unerwünschte Querschnittsverengungen der Gasleitung resultieren und entsprechend umfangreiche Reparatur- und Reinigungsarbeiten erforderlich machen.

Die Erfindung wird nunmehr anhand einer Abbildung und durch nicht einschränkende Beispiele näher erläutert.

Die Figur zeigt als Beispiel ein Schema des Verbundsystems von Einschmelzgefäß und in Gasstromrichtung danach Konditionierungsgefäß, Heißzyklon und Erzreduktionsgefäß.

Ein Einschmelzgefäß (1 ) mit derfeuerfesten Ausmauerung (2) weist nach seiner Neuzustellung ein inneres Volumen von 150 m³ auf. Die Düsen (3) im Boden (4) des Gefäßes bestehen aus zwei konzentrischen Rohren, wobei der lichte Durchmesser des Innenrohres (5) 24 mm und die Ringspaltbreite zwischen den beiden Rohren 1 mm beträgt. Durch das Zeitrairohr (5) der Bodendüsen (3) strömt Sauerstoff oder gemahlene Kohle mit einem Trägergas in die Schmelze. Es kann von Sauerstoff auf die Kohlenstoffträgergassuspension mit Ventilen, gemäß der deutschen Patentanmeldung P 29 49 801, umgeschaltet werden. Zum Schutz der Düsen (3) leitet man durch den Ringspalt (6) gasförmige und/ oder flüssige Kohlenwasserstoffe. in diesem Fall Propan, in einer Menge von ca. 2,5 Vol.-%, bezogen auf den Sauerstoff.

Im oberen Gasraum des Einschmelzgefäßes (1) sind. die feuerfeste Ausmauerung (2) durchdringend. zwei Sauerstoffaufblasdüsen (7) angeordnet, die über die Sammelleitung (8) versorgt werden. Die Austrittsöffnungen der Düsen (7) mit einem lichten Druchmesser von 40 mm befinden sich ca. 3.5 m oberhalb der ruhenden Badoberfläche.

In dem Einschmelzgefäß (1) befindet sich die Eisenschmelze (9). In dem Einschmelzgefäß wird Rohstahl aus den zugeführten Einsatzstoffen, wie nachfolgend für das Prozeßverbungsystem beschrieben, hergestellt.

Während des Betriebes strömt durch 6 Bodendüsen Kohle. Parallel dazu wird durch 8 weitere Bodendüsen Sauerstoff dem Bad zugeführt. Zur Schlackenbildung lädt man dem Sauerstoff Kalkstaub (CaO) auf.

Die Beladung kann kontinuierlich oder nur zeitweise, dann natürlich mit entsprechend höheren Beladungsraten, erfolgen.

Die Aufblasdüsen (7), deren Blasrichtung ungefähr auf das Badzentrum ausgerichtet ist, werden mit Sauerstoff betrieben. Die im Gasraum des Einschmelzgefäßes über eine genügend lange Laufstrecke als Freistrahlen wirkenden Gasstrahlen saugen ein mehrfaches des eingeleitetenden Sauerstoffvolumens von den Reaktionsgasen im Gasraum an und dadurch wird eine Nachverbrennung erreicht. Die dabei frei werdende Wärme wird mittels dieser besonderen Aufblastechnik in Kombination mit der starken Badbewegung durch das Einleiten eines Anteiles des Gesamtsauerstoffs durch die Bodendüsen, weitgehend an die Schmelze übertragen.

Aus dem Einschmelzgefäß entweicht über die Gasleitung (10) mit der feuerfesten Auskleidung (11) Reaktionsgas. Im winderhitzerähnlichen Konditionierungsgefäß (12), das durch seine Gitterung über eine hohe Wärmekapazität verfügt, wird diesem Reaktionsgas Kohlestaub zugemischt. Das besondere Gittermauerwerk mit einer zusätzlichen Gasführung quer zur Hauptströmungsrichtung führt zu einer intensiven Durchmischung von Reaktions- und Kohlestaub, dabei wird das Reaktionsgas reduziert und gleichzeitig abgekühlt. Das Gas verläßt das Konditionierungsge-fäß (12) über die Gasleitung (13) mit einer für die Erzreduktion optimalen Temperatur.

Das reduzierte Reaktionsgas durchströmt einen Heißzyklon (14), in dem mitgerissene Staubpartikel abgeschieden werden. Dann tritt es über die Ringleitung (15) und Einblasdüsen, ähnlich wie bei einem Hochofen, in das Erzreduktionsgefäß, einem Schachtofen (16), ein. Im Erzreduktionsgefäß (16) wird Eisenerz reduziert. Nach geleisteter Reduktionsarbeit verläßt das Gas den Schachtofen (16) und wird über die Sammelleitung (17) abgeführt.

Aus dem Erzreduktionsgefäß (16) wird über die Austragsvorrichtung (18) und die Faileitung (19) das reduzierte Erz direkt in das Einschmelzgefäß geleitet.

Die Gasmenge aus dem Schachtofen 116) kann beliebigen Verbrauchern, z.B. für Heizzwecke. zugeführt werden. Es liegt aber auch im Sinn der Erfindung, das Gas über eine cO₂-Wäsche aufzubereiten und es dann als Reduktionsgas dem Erzreduktionsgefäß wieder zuzuführen.

Bei dem beschriebenen Verbundsystem von Einschmelzgefäß mit teilweiser Nachverbrennung der Reaktionsgase, ihrer anschließenden Reduktion mit gleichzeitiger Abkühlung und der Vorreduktion von Eisenerz wird Rohstahl erzeugt.

Der Rohstahl kann etwa stündlich chargenweise oder überein entsprechendes Abstichloch kontinuierlich aus dem Einschmelzgefäß abgezogen werden.

Bei der Durchführung des erfindungsgemäßen Verfahrens herrscht im Einschmelzgefäß (1) ein Druck von 200 kPa (2 bar). Dieser Druck reicht zur Überwindung der Strömungswiderstände im Gesamtsystem aus und es erübrigen sich Vorrichtungen zur Reduktionsgaskomprimierung.

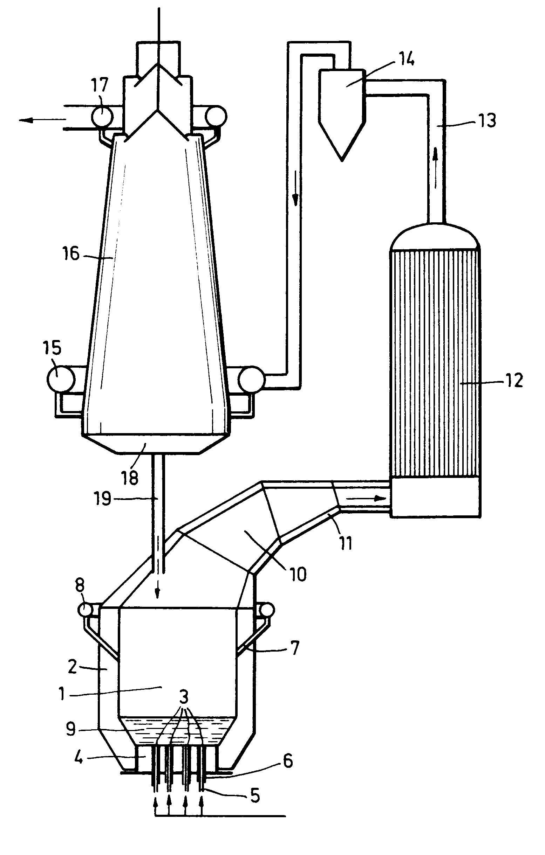

Bei einer weiteren Anwendung des erfindungsgemäßen Verfahrens wird im Einschmelzgefäß anstelle von Sauerstoff Heißwind, d.h. auf ca. 1200°C vorgewärmte Luft, durch die Düsen (7) im oberen Gefäßteil auf die Badoberfläche geblasen. Der Prozeß wird dabei in den gleichen Anlagen durchgeführt, wie schematisch in Figur 1 dargestellt. Durch die Bodendüsen (3) im Einschmelzgefäß (1) strömen Kohle und Sauerstoff mindestens teilweise mit Kalkbeladung in die Eisenschmelze. Die CaO-Menge zur Schlackenbildung ist darauf abgestimmt. daß sich aus dem Kalk und dem Si0₂-Gehalt der Kohleasche und der Gangart des Erzes eine Schlackenbasizität (CaO/Si0₂) von ungefähr 2 einstellt. Diese Schlackenbasizität führt bei der Temperatur von ca. 1550°C der Eisenschmelze zu einer Schwefelverteilungszahl zwischen Schlacke und Bad von etwa 100.

Auf die Badoberfläche bläst man durch die Seitendüsen (7) im oberen Gefäßteil, die etwa 3 bis 4 m oberhalb der ruhenden Badoberfläche angeordnet sind, ausschließlich Heißwind auf die Schmelze.

Gemäß der Erfindung können die Einsatzstoffe, Reduktionsmittel, der Nachverbrennungsgrad, auch das Verfahren der Erzreduktion im Erzreduktionsgefäß unter Einstellung einer ausgeglichenen. Energiebilanz variiert werden.

Das erfindungsgemäße Verfahren ist besonders Wirtschatlich wenn das vorreduzierte Erz mit einem Metallisierungsgrad von 30 bis 70%, vorzugsweise ca. 50%, aus dem Erzreduktionsgefäß im Einscnmelzgefäß eingeicht und gleichzeitig die NachverDrennung der Reaktionsgase im Einschmelzgefäß auf 30 bis 40% gesteigert wird.

Die Gasausnutzung im Erzreduktionsgefäß kann überraschenderweise in der Praxis bis in die Größenordnung von 50% gesteigert werden, wenn die Metallisierung des vorreduzierten Erzes unter den bereits als niedrig geltenden. bekannten Metallisierungsgrad von ca. 75% abgesenkt wird. Beispielsweise läßt sich eine Gasausnutzung im Ofenschacht von 45% bei einem Metallisierungsgrad von 53% nach dem erfindungsgemäßen Verfahren erreichen.

Der Einsatz des vorreduzierten Materials. z.B. vorreduziertes, hochwertiges Erz mit einem Metallisierungsgrad von 30 bis 70%. vorzugsweise ca. 50%, läßt sich mit dem Verfahren gemäß der Erfindung im Einschmelzgefäß problemlos realisieren, sobald man mit hoher Nachverbrennung von 30 bis 40% der im Einschmelzgefäß erzeugten Reaktionsgase arbeitet. Erfindungsgemäß wird dazu die Sauerstoffaufblasrate erheblich gesteigert und kann maximal 100% betragen. Die sauerstoffhaltigen Aufblasgase können dabei aus einer Lanze und/oder Düsen, die im feuerfesten Material im oberen Bereich des Einschmelzgefäßes eingebaut sind, so auf das Bad geblasen werden, daß sich die Gasstrahlen im Gasraum des Einschmelzgefäßes über eine genügend lange Laufstrecke als Freistrahlen ausbilden. Die Freistrahlen saugen dabei ein Mehrfaches des eingeblasenen Gasvolumens an. Die eingesetzten sauerstoffhaltigen Gase können beispielsweise reiner Sauerstoff, Luft oder beliebige Mischungen von Luft und Sauerstoff sein.

Überraschenderweise hat es sich bei der Durchführung des erfindungsgemäßen Verfahrens mit hoher Nachverbrennung von 30 bis 40% gezeigt, daß eine Steigerung der Aufblasrate der oxidierenden Gase bis hin zum ausschließlichen Aufblasen, von beispielsweise vorgewärmter Luft, die betriebssichere Einstellung der relativ hohen Nachverbrennung begünstigt. Wahrscheinlich kann diese überraschende Wirkung auf eine Verminderung der Badbewegung zurückgeführte werden. Es liegt im Sinne der Erfindung, auch die anderen Reaktionspartner, z.B. die Kohle, teilweise durch Aufblasen der Eisenschmelze zuzuführen.

Ein wesentliches Merkmal bestehterfindungsgemäß in der Verwendung von vorgeheizter Luft als Oxidationsmittel. Die höhere physikalische Wärmemenge, aufgrund des relativ großen Ballastgasvolumens in Form von Stickstoff, erlaubt die Zugabe von größeren Reduktionsmittelmengen zum Reaktionsgas aus dem Einschmelzgefäß, unter gleichzeitiger Beibehaltung einer günstigen Temperatur von 800 bis 1000°C für die Erzreduktion. Somit ist es mit dem erfindungsgemäßen Verfahren möglich, einerseits erhöhte Nachverbrennungsgrade im Einschmelzgefäß zuzulassen und andererseits ein optimales Reduktionsgas für das Erzreduktionsgefäß zur Verfügung zu stellen.

Erfindungsgemäß erlaubt dieses Verfahren, den Gesamtprozeß weitgehend autotherm zu gestalten, d.h. es fällt nurein geringer Energieüberschuß an. Die Abgase aus dem Erzreduktionsgefäß weisen nur einen Rest heizwert von 2512 bis 4187 kJ/Nm³ (600 bis 1000 kcal/Nm³) auf. Beispielsweise konnte die Abgasmenge aus dem Erzreduktionsgefäß auf ca. 1900 Nm³ mit einem Restheizwert von ca. 3140 kJ/Nm³ (750 kcal/Nm³) gesenkt werden.

Zur Erzeugung von 1 t Rohstahl aus Erz benötigt man lediglich 500 bis 600 kg einer preisgünstigen Kohle mit hohem Anteil an flüchtigen Bestandteilen. Davon bläst man ca. 350 kg dieser Kohle in das Einschmelzgefäß ein, und zur Reduzierung der mit hohem Nachverbrennungsgrad entweichenden Reaktionsgase aus dem Einschmelzgefäß, wird die restliche Kohlemenge von ca. 150 kg staubförmig zur Reduzierung der Reaktionsgase auf dem Weg zum Erzreduktionsgefäß zugegeben. Dieser Kohleanteil für die Gasreduktion kann durch andere Reduktionsmittel, beispielsweise Erdgas, ersetzt werden.

Erfindungsgemäß kühlen sich die Reaktionsgase bei dem Reduktionsvorgang von ca. 1600°C beim Verlassen des Einschmelzgefäßes auf die für die Reduktion im Erzreduktionsgefäß optimale Temperatur von 800 bis 1000°Cab.

Zum Beispiel befindet sich in einem konverter- ähnlichen Einschmelzgefäß eine Eisenschmelze, in die durch Düsen, die unterhalb der Badoberfläche angeordnet sind, 360 kg Kohle mit 34% flüchtigen Bestandteilen, 7% Asche und 1.5% Feuchtigkeit zur Erzeugung von 1 t Rohstahl eingeblasen werden. Gleichzeitig bläst man 1270 Nm³ Luft mit einer Vorheiztemperatur von 1200°C auf die Badoberfläche der Eisenschmelze. Weiterhin werden in das Einschmelzgefäß 1200 kg vorreduziertes Erz mit einer Temperatur von 800°C und einem Metallisierungsgrad von 59% eingeleitet. Die Mengenangaben beziehen sich in diesem Fall und im weiteren jeweils auf die Erzeugung von 1 t Rohstahl.

Aus dem Einschmelzgefäß entweichen 1710 Nm³ Gas mit einer Temperatur von 1575°C und der Zusammensetzung von CO 19%, C0₂ 8%, H₂ 5%, H₂0 8.5%, N₂ 59.5%. Dieses Gas wird auf seinem Weg zum Reduktionsgefäß in einem Schachtofen mit 146 kg Kohle reduziert und weist dann eine Zusammensetzung von 31% CO, 1.6% C0₂, 14% H₂, 1.7% H₂0, 49.6% N₂ und eine Temperatur von ca. 1000°C auf. Das Gasvolumen hat sich durch die Reduktionskohlezugabe auf ca. 2060 Nm³ erhöht.

Anstelle der 146 kg Kohle, zur Reduktion der aus dem Einschmelzgefäß kommenden Reaktionsgase, können auch 120 Nm³ Erdgas für die Gasreduktion eingesetzt werden.

Das den Schachtofen verlassende Abgas wird naß gereinigt und weist dann eine Zusammensetzung von ca. 18% CO, 17% C0₂, 10% H₂, 2% H₂0, 53% N₂ auf. Der Heizwert beträgt ca. 3307 kJ/Nm³ (790 kcal/Nm³). Von diesem Gas werden ca. 750 Nm³ zur Luftvorwärmung verwendet.

Der Gesamtgasüberschuß beträgt lediglich ca. 1100 Nm³, entsprechend ungefähr 3,77 GJ (0.9 Gcal).

Diese erfindungsgemäße Verfahrensvariante weist demgemäß gegenüber den bekannten Prozessen erhebliche wirtschaftliche Vorteile auf. Das beschriebene System, beispielsweise das Erzreduktionsgefäß, kann durch andere bekannte Reduktionsverfahren, wie beispielsweise Wirbelbett, zurkulierende Wirbelschicht, ersetzt werden. Die Zufuhr der Reduktionsmittel zum Reaktionsgas aus dem Einschmelzreaktor kann ebenfalls variiert werden, z.B. können anstelle der direkten Reduktionsmitteleinspeisung in die Rohrleitung, auch gesonderte Durchströmgefäße beispielsweise mit verbesserter Durchmischung zur Anwendung kommen.

## Patentansprüche

1. Verfahren zur Eisenherstellung aus Eisenerz, das in einem Erzreduktionsgefäß im wesentlichen mit dem Reaktionsgas aus einem Einschmelzgefäß bis zu einem Metallisierungsgrad von 30 bis 70% vorreduziert und dann diesem Einschmelzgefäß zugeführt und unter Zugabe von kohlenstoffenthaltenden Brennstoffen und sauersoffhaltigen Gasen vollständig reduziert und geschmolzen wird, wobei die aus der Eisenschmelze austretenden Reaktionsgase im Einschmelzgefäß teilsweise nachverbrannt werden und die dabei entstehende Wärme weitgehend an die Schmelze übertragen wird und die Reaktionsgase auf dem Weg zum Erzreduktionsgefäß mit Reduktionsmitteln abgekühlt und reduziert werden.

2. Verfahren nach Anspruch 1, dadurch gekennzeichnet, daß 10% bis 90% der dem Einschmelzgefäß zugeführten Gesamtsauerstoffmenge auf das Bad aufgeblasen werden.

3. Verfahren nach Anspruch 1 oder 2, dadurch gekennzeichnet, daß die Reduktionsmittelzugabe zum Reaktionsgas unter inniger Durchmischung in einem zwischen Einschmelzgefäß und Erzreduktionsgefäß angeordneten Konditionierungsgefäß durchgeführt wird.

4. Verfahren nach Anspruch 3, dadurch gekennzeichnet, daß das Konditionierungsgefäß eingesetzt wird, das eine hohe Wärmkapazität aufweist.

5. Verfahren nach einem der Ansprüche 1 bis 4, dadurch gekennzeichnet, daß in das Einschmelzgefäß Schlackenbildner eingebracht werden.

6. Verfahren nach einem der Ansprüche 1 bis 5, dadurch gekennzeichnet, daß im Einschmelzgefäß eine Schlackenbasizität von 2 eingestellt wird.

7. Verfahren nach einem der Ansprüche 1 bis 6, dadurch gekennzeichnet, daß das Einschmelzgefäß mit Überdruck von 1,5 bis 5 bar betrieben wird.

8. Verfahren nach einem der Ansprüche 1 bis 7, dadurch gekennzeichnet, daß im Einschmelzgefäß die Eisenschmelze direkt zu Stahl gefrischt und dann abgestochen wird.

9. Verfahren nach einem der Ansprüche 1 bis 8, dadurch gekennzeichnet, daß eine Nachverbrennung der Reaktionsgase im Einschmelzgefäß von 30% bis 40% angewandt wird.

10. Verfahren nach einem der Ansprüche 1 bis 9, dadurch gekennzeichnet, daß vorgewärmte Luft als Oxidationsmittel auf die Eisenschmelze geblasen wird.

11. Verfahren nach einem der Ansprüche 1 bis 10, dadurch gekennzeichnet, daß die oxidierenden Gase im Einschmelzgefäß auf die Badoberfläche geblasen werden.

12. Verfahren nach einem der Ansprüche 1 bis 11, dadurch gekennzeichnet, daß die Kohle im Einschmelzgefäß teilweise von oben der Eisenschmelze zugeführt wird.

## Revendications

1. Procédé de production de fer à partir de minerai de fer, qui le préréduitdans une cuve de réduction de minerai, pour l'essentiel avec le gaz réactif provenant d'une cuve de fusion jusqu'à un degre de métallisation de 30 à 70% et le conduit ensuite dans une cuve de fusion, et puis, par addition de combustibles contenant du carbone et de gaz contenant de l'oxygène il est complètement réduit et fondu, les gaz réactifs provenant du fer fondu dans la cuve de fusion sont partiellement post- brûlés et la chaleur ainsi formée est largement transmise à la masse fondue et les gaz réactifs sont refroidis et réduits par des reducteurs sur le chemin de la cuve de reduction.

2. Procédé selon la revendication 1 caractérisé en ce que 10 à 90% de la quantité totale d'oxygène introduit est insufflee sur le bain.

3. Procédé selon la revendication 1 ou 2, caractérisé en ce que l'addition de réducteur au gaz réactif a lieu par mélange intime dans une cuve de conditionnement placée entre la cuve de fusion et la cuve de réduction.

4. Procédé selon la revendication 3, caractérisé en ce qu'on utilise une cuve de conditionnement qui présente une capacité calorifique élevée.

5. Procédé selon l'une des revendications 1 à 4, caractérisé en ce qu'on ajoute un formateur de laitier dans la cuve de fusion.

6. Procédé selon l'une des revendications 1 à 5, caractérisé en ce que la basicite de laitier est réglée à 2 dans la cuve de fusion.

7. Procédé selon l'une des revendications 1 à 6, caractérisé en ce qu'on fait fonctionner la cuve de fusion sous une surpression de 1,5 à 5 bar.

8. Procédé selon l'une des revendications 1 à 7 caractérisé en ce que dans la cuve de fusion le fer fondu est affiné directement en acier et est ensui- i-te coulé.

9. Procédé selon l'une des revendications 1 à 8, caractérisé en ce qu'on utilise une post-combustion de 30 à 40% des gaz réactifs dans la cuve de fusion.

10. Procédé selon l'une des revendications 1 à 9, caractérisé en ce qu'on insuffle de l'air préchauffé comme oxydant sur le fer fondu.

11. Procédé selon l'une des revendications 1 à 10, caractérisé en ce que les gaz oxydants sont insufflés dans la cuve de fusion sur la surface du bain.

12. Procédé selon l'une des revendications 1 à 11, caractérisé en ce que le charbon est introduit en partie dans la cuve de fusion par le dessus du fer fondu.

## Claims

1. A process for producing iron from iron ore which is prereduced in an ore reduction vessel essen- tiallywith the reaction gas from a melting crucible up to a degree of metalization of 30 to 70% and then supplied to this melting crucible and completely reduced and melted with the addition of carbonaceous fuels and oxygenous gases, whereby the reaction gases escaping from the molten iron are partly afterburned in the melting crucible and the resulting heat is largely trans- ferrred to the molten iron and the reaction gases are cooled and reduced on their way to the ore reduction vessel with the help of reducing agents.

2. The process of claim 1, characterized in that about 10 to 90% of the total amount of oxygen supplied to the melting crucible is top blown onto the bath.

3. The process of claim 1 or 2, characterized in that the reducing agents are added to the reaction gas so as to be intimately mixed in a conditioning vessel disposed between the melting crucible and the ore reduction vessel.

4. The process of claim 3, characterized in that the conditioning vessel has a high thermal capacity.

5. The process of any of claims 1 to 4, characterized in that slag-forming constituents are introduced into the melting crucible.

6. The process of any of claims 1 to 5, characterized in that a slag basicity of 2 is standardized in the melting crucible.

7. The process of any of claims 1 to 6, characterized in thatthe melting crucible is operated with an excess pressure of 1.5 to 5 bar.

8. The process of any of claims 1 to 7, characterized in that the molten iron is directly refined into steel in the melting crucible and then run off.

9. The process of any of claims 1 to 8, characterized in that an afterburning of the reaction gases in the melting crucible of 30% to 40% is used.

10. The process of any of claims 1 to 9, characterized in that preheated air is blown onto the molten air as an oxidizing agent.

11. The process of any of claims 1 to 10, characterized in that the oxidizing gases are blown onto the surface of the bath in the melting crucible.

12. The process of any of claims 1 to 11, characterized in that the coal in the melting crucible is partly supplied to the molten iron from above.
